# FASCICULE DE BREVET EUROPEEN

(11) **EP 1 610 274 B1**
(45) Date de publication et mention de la délivrance du brevet: **08.01.2020**
(21) Numéro de dépôt: 05108638.7
(22) Date de dépôt: 01.06.2005
(51) Int. Cl.: G07F 7/10, H04L 9/08, G06Q 20/02, G06Q 20/38, G06Q 20/40, G07F 17/42, H04L 9/32

(54) **Procédé de téléchargement de clefs billettiques**
Verfahren zum Herunterladen von Ticketing Schlüsseln
Method of downloading ticketing keys

(30) Priorité: 25.06.2004 FR 0407006
(43) Date de publication de la demande: 28.12.2005
(73) Titulaire: Revenue Collection Systems France SAS, 91220 Plessis-Pâté (FR)
(72) Inventeur: Ratier, Denis, Thales Intellectual Property, 94117 Arcueil (FR); Kekenbosch, Gilles, Thales Intellectual Property, 94117 Arcueil (FR); Aubry, Philippe, Thales Intellectual Property, 94117 Arcueil (FR)
(74) Mandataire: Lucas, Laurent Jacques

(56) Documents cités:
- EP-A- 0 998 073
- WO-A-02/091308
- US-A- 5 534 857

## Description

La présente invention concerne le domaine des transports publics, et plus précisément des équipements et infrastructures permettant la gestion des titres de transport.

Un titre de transport est ce qui permet à un utilisateur d'utiliser des services de transport publics, tels que le métro, le train, le bus... Un titre de transport comporte un support physique, le support de titre, sur lequel sont mémorisées des données. On distingue ainsi le support logique (titre de transport), c'est à dire l'ensemble formé par le support physique et ses données, du support physique en tant que tel. Le support physique peut être de différentes technologies: magnétique, carte à puce avec ou sans contact, jeton à puce... Les données qui sont mémorisées sont des données relatives à un ou plusieurs contrats d'utilisation d'un service de transport. Un contrat d'utilisation d'un service de transport est couramment appelé un produit, car c'est ce qui est vendu par les opérateurs de transport. Un produit peut être par exemple un abonnement mensuel à un service de métro dans une zone géographique déterminée. On appelle instance de produit les données associées à un contrat qui sont mémorisées sur un support physique. D'autres données peuvent être mémorisées sur le support physique. Ces autres données peuvent être des données personnelles (nom, adresse, date de naissance...) décrivant le titulaire du titre de transport. Bien entendu, les titres de transports anonymes (billets de métro par exemple) ne comportent pas de données personnelles.

Les équipements réalisant des opérations de lecture ou d'écriture sur les titres de transports sont appelés des équipements frontaux, c'est à dire appartenant au "front-office". Pour effectuer une opération sur une zone déterminée d'un titre de transport, ces équipements utilisent une clé secrète appelée clé billettique. Chaque équipement dispose en fait d'une pluralité de clés billettiques lui conférant les droits d'accès (lecture seule, lecture écriture, ...) aux différentes zones du support physique. Cet ensemble de clés est appelé un jeu de clés billettiques. Les clés billettiques sont générées à huis clos en présence des opérateurs de transports et de l'autorité organisatrice, cette opération étant appelée "cérémonie des clés".

Les équipements frontaux doivent être initialisés. L'opération d'initialisation consiste à mémoriser un jeu de clés billettiques dans une zone mémoire protégée contre la lecture. En pratique, c'est une partie seulement de l'équipement (celle dans laquelle est mémorisé le jeu de clés billettiques) qui a besoin d'être initialisée. Les clefs billettique proviennent d'un endroit centralisé, appelé centre de gestion des clés (ou KMS pour "Key Management System"), où elles sont conservées. L'initialisation se fait de façon conventionnelle en amenant l'équipement (une partie de celui-ci) au centre de gestion de clés, et ce sous le contrôle permanent d'un responsable de sécurité (appelé "Security Manager" dans la littérature anglo-saxonne).

Une fois les équipements installés, l'opération d'initialisation doit être renouvelée périodiquement. Elle peut être renouvelée une fois tous les deux ans par exemple, lors de la mise en circulation de nouvelles cartes.

L'opération d'initialisation nécessite une présence humaine pour garantir la confidentialité du chargement des clés dans les équipements frontaux. Cette présence est possible tant que le nombre d'équipements à initialiser reste de l'ordre du millier d'unités. Cependant, elle est économiquement voire matériellement inenvisageable lorsque le nombre d'équipements à initialiser est de l'ordre de 100 000 unités, notamment pour un système billettique à échelle nationale.

Le brevet US5534857 décrit notamment un procédé d'écriture de données sécurisées provenant d'un émetteur sur une carte à puce d'un client distant de l'émetteur. Le procédé d'écriture de données sécurisées utilise notamment une interaction entre trois entités différentes : l'émetteur, le client et un détaillant.

Le document WO 02/091308 A (HALPERN, JOHN, WOLFGANG) 14 novembre 2002 (2002-11-14) fait également partie de l'état de l'art.

L'invention vise à apporter une solution permettant de charger des clés billettiques tout en garantissant la confidentialité de ces clefs, et sans nécessiter de présence humaine.

A cet effet, l'invention a pour objet un procédé selon la revendication indépendante 1.

Selon un mode de réalisation avantageux, les clés billettiques sont transmises au module de lecture et d'écriture sous forme chiffrée, le chiffrement étant réalisé au moyen d'une clef de transport K_{TRi} partagée uniquement entre l'entité ayant généré les clefs billettiques d'une part, et le module de lecture et d'écriture d'autre part. Ceci permet d'augmenter la sécurité des transmissions d'une part, et de dégager la responsabilité des opérateurs et du fabricant d'autre part.

Selon un mode de réalisation avantageux, le module à accès sécurisé étant un module cryptographique à clés asymétriques disposant d'une clé publique et d'une clé privée, l'autorité de certification associe la clé publique aux données d'identification de l'équipement frontal pour former le certificat numérique.

Selon un mode de réalisation avantageux, le procédé d'authentification mutuelle répond à la norme ISO 9798-2.

L'invention a aussi pour objet un procédé de gestion de clefs billettiques dans lequel dans lequel:
(a) on insère dans le module de lecture et d'écriture au moins une clef secrète lors de sa fabrication,
(b) on insère cette clef secrète dans le module à accès sécurisé indépendant,
(c) on met en œuvre le procédé selon la revendication indépendante 1, le module de lecture et d'écriture et le module à accès sécurisé s'authentifiant mutuellement avec au moins la clef secrète insérée lors de la fabrication du module de lecture et d'écriture,
(d) on génère une clef de session Ks lors de l'authentification mutuelle, cette clef de session étant partagée entre le module de lecture et d'écriture et le module à accès sécurisé,
(e) on utilise la clef de session pour transmettre au moins une nouvelle clef secrète d'exploitation K_{abi} au module de lecture et d'écriture d'une part et au module à accès sécurisé d'autre part, la clef secrète d'exploitation étant destinée à être utilisée à la place de la clé secrète insérée lors de la fabrication du module de lecture et d'écriture lors de la mise en œuvre du procédé d'authentification mutuelle,
(f) on génère de façon itérative une nouvelle clef de session Ks à chaque mise en œuvre du procédé d'authentification mutuelle, et on remplace la clef secrète d'exploitation par une nouvelle clé transmisse avec la nouvelle clé de session.

D'autres caractéristiques et avantages de l'invention apparaîtront à la lecture de la description détaillée suivante présentée à titre d'illustration non limitative et faite en référence aux figures annexées, lesquelles représentent :
- la figure 1, une représentation schématique des composants d'un exemple d'équipement frontal,
- la figure 2, une représentation en niveaux hiérarchiques d'un système de billettique pour transport public,
- la figure 3, un mode de réalisation avantageux de l'invention, dans lequel une clef de session est générée de manière dynamique,
- la figure 4, une représentation des entités intervenant dans le procédé représenté à la figure 3.

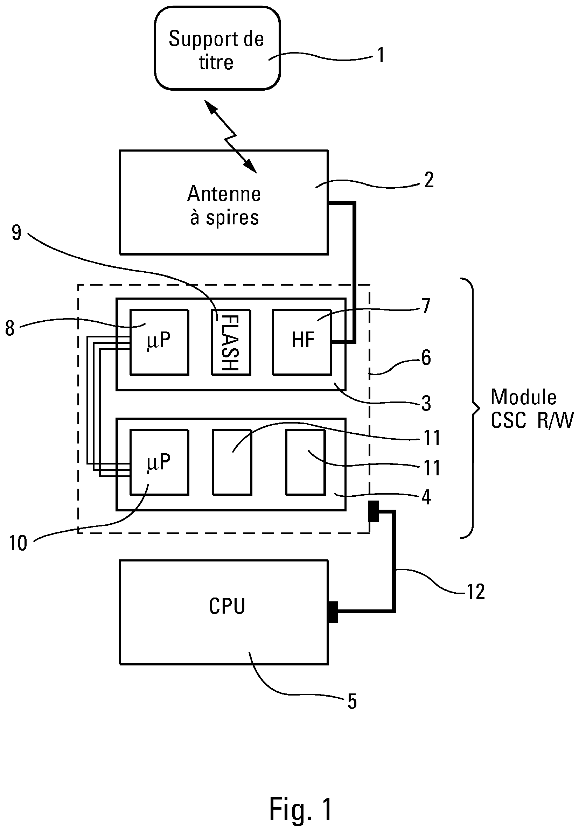

On se réfère maintenant à la figure 1 sur laquelle est représenté un exemple d'équipement frontal. L'équipement permet d'accéder aux données enregistrées sur un support de titre 1. Dans cet exemple, le support de titre est une carte à puce sans contact. L'équipement comprend une antenne à spire 2, cette antenne présentant une forme de cadre. L'antenne est destinée à émettre et à recevoir des ondes électromagnétiques. La fréquence porteuse de ces ondes est de façon conventionnelle 13,56 MHz en conformité avec la norme ISO/IEC 1443. La fréquence porteuse fournit par couplage électromagnétique l'énergie nécessaire pour faire fonctionner la carte sans contact 1.

L'antenne à spires 2 est reliées à une carte électronique principale (désignée "mainboard" dans la littérature anglo-saxonne) référencée 3 sur la figure. Cette carte comporte un circuit d'émission/réception à haute fréquence 7 relié à l'antenne 2. Le circuit d'émission/réception à haute fréquence est piloté par un microprocesseur 8 placé sur la même carte. Le microprocesseur 8 peut être un microprocesseur de type RISK tel qu'un ARM7. Le microprocesseur 8 peut être relié à une mémoire de type FLASH 9, elle-même placée sur la carte électronique principale 3.

La carte électronique principale est reliée à son tour à une autre carte électronique 4, appelée par la suite carte électronique sécurisée. Un microprocesseur sécurisé 10 est soudé sur la carte électronique sécurisée 4. Le microprocesseur sécurisé 10 forme un module d'accès sécurisé SAM (acronyme de l'expression anglo-saxonne "Security Access Module") dans lequel est destiné à être mémorisé le jeu de clé billettique de l'équipement. Le microprocesseur sécurisé peut être un produit "Mifare®" de la société PHILIPS, tel que celui ayant pour référence MF RC150 ou celui ayant pour référence MF RC171. Des emplacements 11 peuvent être prévus pour accueillir des cartes à mémoire sécurisées, telle que des cartes SAM au format microsim (norme ID000 /ISO/IEC 7810).

La carte électronique principale 3 et la carte électronique sécurisée 4 peuvent être noyée ensemble dans une résine pour former un module 6, désigné par la suite module CSC R/W (acronyme de l'expression anglo-saxonne "Contactless SmartCard Reader/Writer").

Le module CSC R/W est un composant formant un périphérique d'une unité centrale 5, appelée encore CPU (acronyme issu de l'expression anglo-saxonne "Central Processing Unit"). L'unité centrale 5 est le composant de l'équipement frontal qui pilote le module CSC R/W. Le module CSC R/W et l'unité centrale 5 sont reliés entre eux par une liaison de données, telle qu'une liaison série de type RS232C.

L'initialisation de l'équipement peut être réalisée en amenant physiquement le module CSC R/W au centre de gestion de clefs, sous le contrôle d'un responsable de sécurité. A cet endroit, on charge le jeu de clé billettique dans la mémoire du microprocesseur sécurisé 10. Une fois initialisé, le module CSC R/W devient un élément sensible en terme de sécurité. En effet, en cas de vol, le module CSC R/W peut être utilisé avec une application logicielle pirate permettant de réaliser des opérations de rechargement de titres de transport illégales.

Par conséquent, non seulement l'initialisation de l'équipement est une étape sensible en terme de sécurité, mais la détention même d'un équipement initialisé présente des risques en terme de sécurité. Ce problème est d'autant plus critique que le système de billettique est étendu. C'est le cas notamment des systèmes implantés à échelle nationale ou régionale dans lesquels sont impliqués plusieurs opérateurs de transport.

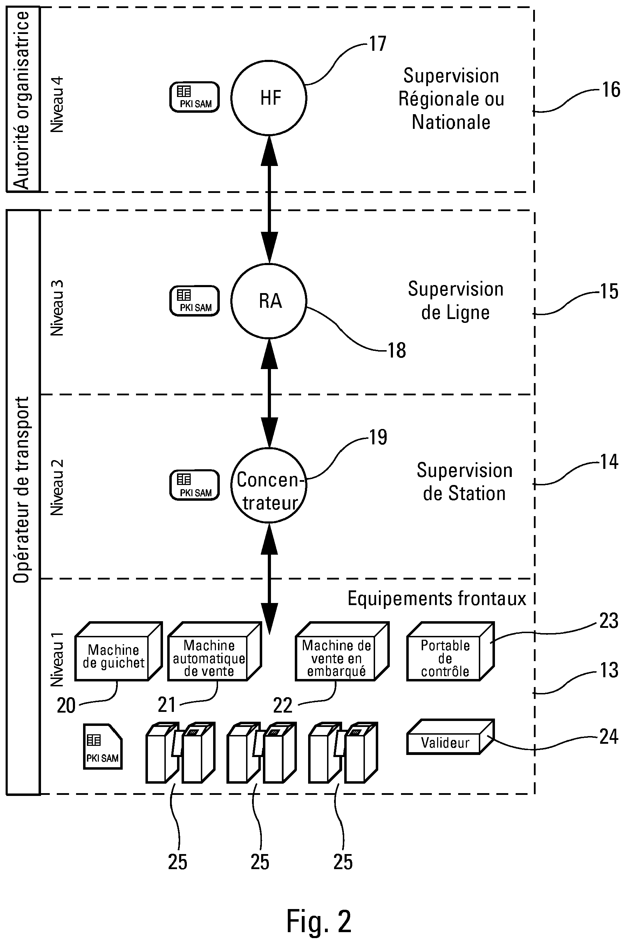

On se réfère maintenant à la figure 2 sur laquelle est représenté un système billettique pour transport public susceptible d'être implanté à échelle nationale ou régionale et pour tout type de transport public, tel que les trains de banlieue, les trains grandes lignes (nationales), les trains internationaux, les métros, les bus urbains et interurbains, les tramways, les trolleys, les taxis, les ferries, les bateaux...

Un système de billettique permet de remplir quatre fonctions principales: la vente de titres de transports, la validation des titres de transports des voyageurs, l'inspection et l'information.

La vente peut être réalisée dans un réseau de vente déployé dans les gares de métro, de trains... et même de manière plus large dans les bureaux de tabac, chez les voyagistes, les supermarchés...

La validation est normalement effectuée par chaque voyageur à chaque voyage en utilisant des équipements frontaux faisant partie d'un réseau de validation. Les équipements frontaux peuvent prendre la forme de portillons automatiques pour l'accès aux gares de métro par exemple ou de bornes de validations installées sur des quais ou dans des véhicules de transport.

L'inspection est une opération effectuée par des inspecteurs utilisant à cet effet des terminaux portables dédiés formant un réseau d'inspection. Cette opération consiste à vérifier que chaque voyageur dispose d'un droit à voyager valide.

L'information est réalisée par un réseau d'information, qui permet à chaque voyageur de connaître l'état de son titre de transport. A cet effet, le réseau d'information peut comporter des bornes d'information dédiées ou utiliser les autres équipements déployés pour les autres réseaux (vente, validation, inspection).

Un système billettique peut être déployé pour les besoins d'un opérateur de transport unique aussi bien que pour une pluralité d'opérateurs de transport. Dans ce dernier cas, les opérateurs de transport partagent les mêmes supports de titre et assurent plusieurs degrés d'interopérabilité. Quoiqu'il en soit, les équipements d'un tel système peuvent être répartis en niveaux hiérarchisés.

Un premier niveau référencé 13 sur la figure (appelé "niveau 1" ou "front office" dans la littérature anglo-saxonne) regroupe tous les équipements frontaux, c'est à dire les équipements qui sont au contact du voyageur, tel que machines de vente, de validation, d'inspection ou d'information. On y trouve notamment:
- des terminaux point de vente, qui peuvent prendre la forme de machines de guichet 20, installés au sein de l'infrastructure d'un opérateur de transport pour vendre l'ensemble des titres de transport proposés par celui-ci,
- des terminaux point de vente simplifiés, pouvant être des machine de vente en embarqué 22, et qui peuvent être utilisés dans un bureau de tabac par exemple,
- des machines automatiques de vente 21 qui permettent de vendre des titres de transports aux voyageurs sans intervention d'un opérateur de vente,
- des portables de contrôle 23 qui permettent aux inspecteurs d'effectuer leurs opérations de contrôle sur l'ensemble des titres de transports en possession des voyageurs,
- des valideurs 24, qui permettent de valider son titre de transport ay début de chaque voyage,
- des portillons 25, qui permettent de valider un titre de transport pour accéder à une zone d'embarquement lorsque l'accès à cette zone est limité aux personnes munies d'un titre de transport valide.

Un second niveau référencé 14 sur la figure (appelé "niveau 2" ou "niveau de supervision de station") regroupe les équipements permettant de concerter les informations pour un opérateur de transport public. Les équipements de ce niveau sont appelés des concentrateurs 19. On y trouve notamment des concentrateurs de gare et des concentrateurs de dépôt. Un concentrateur de gare pilote l'ensemble des équipements frontaux d'une gare et concentre les informations au niveau de cette gare. Un concentrateur de dépôt pilote l'ensemble des équipements frontaux qui équipent un dépôt, y compris les équipements installés dans les véhicules qui rejoignent ce dépôt la nuit, et concentre les informations au niveau de ce dépôt.

Un troisième niveau référencé 15 sur la figure (appelé "niveau 3" ou "niveau de supervision de ligne") comprend les équipements permettant de centraliser les informations d'un opérateur donné. On peut trouver à ce niveau un système central chargé de gérer de façon centralisée les données d'un opérateur de transport. Le système central peut lui-même être relié à d'autres équipements du niveau 3, tel qu'un agent d'enregistrement 18 (ou RA de l'expression anglo-saxonne "Registration Agent") chargé d'administrer le réseau d'un opérateur de transport: allocation et suppression des adresses IP associées aux équipements de l'opérateur, gestion des groupes utilisateurs...

Ces trois premiers niveaux rassemblent les équipements d'un opérateur de transport. Lorsque plusieurs opérateurs de transport partagent des données, on définit un niveau supérieur 16. Ce niveau est appelé "niveau 4" ou "niveau de Supervision Régionale ou Nationale". Il comprend les équipements d'une autorité organisatrice, dépendant par exemple de l'État ou d'une région, cette autorité étant chargée en particulier de calculer les balances financières (compensation et répartition) entre les opérateurs et d'initier les virements bancaires entre ces opérateurs. On trouve aussi à ce niveau une autorité de certification 17 et un système de gestion de clef (non représenté).

L'autorité de certification est une autorité de confiance, disposant d'une clef privée qui lui est propre, permettant de générer des certificats numériques signés par cette clef privée. Chaque équipement du système billettique dispose d'un certificat (généré par l'autorité de certification) qui lui est propre d'une part, et de la clef publique de l'autorité de certification d'autre part. Le certificat d'un équipement lui permet de s'authentifier auprès d'un autre équipement du système billettique, cet autre équipement pouvant vérifier le certificat en utilisant la clef publique de l'autorité de certification.

Le système de gestion de clefs permet de générer et de conserver de nouvelles clefs secrètes, et d'importer et de mémoriser les clefs secrètes générées à l'extérieur. Le système de gestion de clef est aussi connu sous le nom de "Key Management System" dans la littérature anglo-saxonne. Le système de gestion de clef est désigné par l'acronyme KMS dans la suite de la description.

Selon l'invention, aucune donnée sensible (jeu de clés billettique) n'est mémorisée de façon permanente dans les équipements frontaux. Ces données sont téléchargées de façon sécurisée, c'est à dire d'une façon ne leur permettant pas d'être interceptées ou modifiées durant le téléchargement. Elles sont ensuite mémorisées de façon temporaire dans une mémoire non permanente, c'est à dire une mémoire de type RAM.

A cet effet, des communications sécurisées sont établies de l'endroit où sont mémorisés les clés billettiques utilisées d'une part, c'est à dire le KMS, jusqu'à l'endroit où sont destinées à être transmises ces clés d'autre part, c'est à dire les équipements frontaux.

L'invention vise plus particulièrement la communication avec le module de l'équipement frontal destiné à recevoir les jeux de clés billettiques, c'est à dire dans cet exemple de réalisation avec le module CSC R/W. Le module CSC R/W communique avec l'unité de contrôle 5 de l'équipement frontal.

On décrit maintenant un mode de réalisation de l'invention. On insère en usine des clefs secrètes initiales lors de la fabrication d'un nouveau module CSC R/W. Plus précisément, les clefs sont insérées dans la mémoire FLASH qui est placée sur la carte électronique principale du module. La mémoire FLASH forme ainsi un module SAM logiciel. La mémoire FLASH peut être remplacée par tout type de mémoire permanente du module. Les clefs secrètes sont de préférences des clefs symétriques triple DES (acronyme de l'expression anglo-saxonne "Data Encryption Standard") conforme à la norme FIPS 46-3. Ces clefs secrètes, au nombre de deux, sont désignées dans la suite de la description K_{ab0} et K_{TR0}.

Une copie des clefs K_{ab0} et K_{TR0} est importée et mémorisée au niveau 4, dans le KMS. Bien entendu, ces clefs peuvent alternativement être générées par l'équipement KMS et transmises à l'usine pour la fabrication d'un nouveau module CSC R/W.

Selon l'invention, lorsqu'un nouvel équipement frontal doit être mis en service chez un opérateur de transport, on réalise un enregistrement de cet équipement. L'enregistrement concerne l'équipement dans son ensemble, c'est à dire muni de son module CSC R/W. L'enregistrement fait intervenir l'autorité de certification 17 et un module SAM à clés asymétriques.

On décrit maintenant un exemple de mise en œuvre d'un enregistrement d'équipement frontal. Dans cet exemple de mise en œuvre, on utilise des cartes Cryptoflex® (marque de la société SCHLUMBERGER/AXALTO). Une carte Cryptoflex® est module SAM offrant des fonctions cryptographiques à clés asymétriques, et présentant une forme de carte à puce. La carte Cryptoflex est appelée dans la suite de la description carte SAM PKI. Bien entendu, la mise en œuvre de l'invention n'est pas limitée à ce type de support physique.

Pour initialiser la carte SAM PKI, on l'insère dans un lecteur de l'autorité de certification. L'autorité de certification émet une commande à destination de la carte pour lui faire générer une paire de clefs asymétrique comportant une clé privée et une clé publique. La clé publique est ensuite exportée de la carte SAM PKI vers l'autorité de certification. La clef privée reste dans la carte SAM PKI d'où elle ne peut jamais être exportée ou lue.

L'autorité de certification associe la clef publique provenant de la carte SAM PKI avec des données d'identification de l'équipement frontal à enregistrer. Les données d'identification peuvent être un nom logique utilisé sur un réseau de type IP ou un numéro de série du matériel ou une combinaison d'un nom logique et d'un numéro de série. L'association de la clef publique et des données d'identification est ensuite signée par la clé privée de l'autorité de certification. L'association signée constitue un certificat numérique. Le format du certificat est de préférence celui désigné par X509V3 dans le standard "ITU-T Recommendation". Le certificat est transmis par l'autorité de certification à la carte SAM PKI pour y être mémorisé. Cette étape termine la phase d'enregistrement de l'équipement.

Selon l'invention, on réalise ensuite une insertion de clefs d'infrastructure dans la carte SAM PKI. A cet effet, on connecte la carte SAM PKI à un lecteur du KMS. Le KMS génère une clef destinée à crypter le jeu de clés billettiques. Cette clef peut être une clef symétrique de type triple DES. On désigne cette clef par K_{EK} (acronyme de l'expression anglo-saxonne "Key Encryption Key") dans la suite de la description. Les clefs K_{EK} et K_{ab0} sont exportées du KMS vers la carte SAM PKI pour y être mémorisées.

Une fois l'équipement enregistré, le résultat de l'enregistrement étant mémorisé dans la carte SAM PKI avec les clefs d'infrastructure, la carte SAM PKI est placée dans un lecteur associé à l'équipement frontal, c'est à dire un lecteur qui peut être commandé par l'équipement frontal.

Plusieurs moyens permettent de lire la carte SAM PKI à partir de l'équipement frontal. Selon un mode de réalisation avantageux, la carte SAM PKI est acheminée vers le site où est localisé l'équipement frontal pour être insérée dans l'un des emplacements 11 du module CSC R/W pour être lue par l'unité centrale 5 de l'équipement frontal. Dans ce mode de réalisation, la carte SAM PKI est physiquement sur le module CSC R/W, mais elle est en fait reliée logiquement à l'unité centrale 5 par l'intermédiaire de la liaison de données 12.

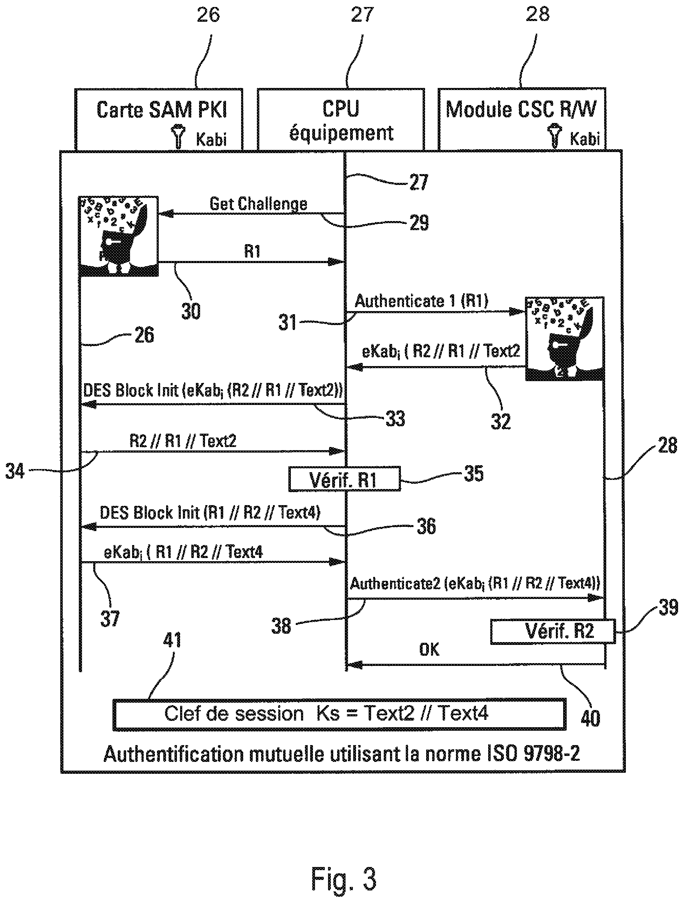

On se réfère maintenant à la figure 3 sur laquelle est représenté un mode de réalisation avantageux de l'invention, dans lequel une clef de session est générée de manière dynamique.

La carte SAM PKI est d'abord débloquée de manière conventionnelle par un code d'identification appelé encore code PIN (acronyme de l'expression anglo-saxonne "Personnal Identification Number"). Cette opération permet d'activer la carte SAM PKI, pour accéder à ses données et ses services. Le code d'identification est fourni par l'équipement, et plus précisément par une application hébergée dans l'unité centrale 5 de l'équipement.

Ensuite, on réalise une authentification mutuelle de la carte SAM PKI 26 et du module CSC R/W 28. Ce procédé d'authentification mutuelle fait intervenir au moins un secret partagé entre la carte d'une part et le module CSC R/W d'autre part. Le secret partagé est au départ la clé K_{ab0}. Une autre entité 27 intervient dans ce procédé pour effectuer des opérations et transmettre des requêtes et des réponses entre la carte SAM PKI d'une part et le module CSC R/W d'autre part. Fonctionnellement, l'entité 27 est ainsi un pilote. Le pilote 27 peut être en pratique l'unité centrale 5 de l'équipement.

Dans le mode de réalisation décrit, le procédé d'authentification mutuelle suit la norme ISO 9798-2. Le pilote 27 transmet une commande 29 à la carte SAM PKI pour lui faire générer un nombre aléatoire. La commande 29 est désignée "GetChallenge" dans la suite de la description. En réponse à cette commande, la carte SAM PKI génère un nombre aléatoire R1 et le transmet au pilote.

Le pilote transmet ensuite une première demande d'authentification 31 au module CSC R/W. La première demande d'authentification est transmise avec le nombre aléatoire R1 utilisé comme argument de cette commande. La demande d'authentification est désignée "Authenticate1" dans la suite de la description. En réponse à cette demande 31, le module CSC R/W:
- génère deux nouveaux nombres aléatoires R2 et Text2,
- réalise la concaténation des nombres R2, R1 et Text2,
- crypte le résultat de la concaténation avec sa clef symétrique K_{ab0} pour former un cryptogramme qui servira à son authentification,
- et transmet ce cryptogramme au pilote.

Le pilote transmet ensuite une commande 33 à la carte SAM PKI pour lui faire déchiffrer le contenu du cryptogramme formé par le module CSC R/W. La commande 33 est transmise avec le cryptogramme à déchiffrer utilisé comme argument de cette commande. La commande 33 est désignée par "DESBlockInit" dans la suite de la description.

En réponse à la commande "DESBlockInit" 33, la carte SAM PKI déchiffre le cryptogramme avec sa copie de la clé K_{ab0} et transmet le résultat au pilote.

Lorsqu'il reçoit le résultat du déchiffrement, c'est à dire la concaténation de R2, R1 et Text2, le pilote vérifie 35 que ce résultat comprend bien le nombre R1. La présence de ce nombre prouve que la carte a bien déchiffré le cryptogramme, c'est à dire qu'elle détient bien la clef secrète K_{ab0}.

Le pilote génère alors un nouveau nombre aléatoire Text4, puis concatène les nombres R1, R2 et Text4. Le résultat de cette concaténation est transmis comme argument d'une commande de chiffrement 36 à la carte SAM PKI. En fait la commande de chiffrement 36 et la commande de déchiffrement 33 sont une seule et même commande, la commande "DESBlockInit", car les clés utilisées sont des clefs symétriques.

En réponse à la commande 36, la carte SAM PKI chiffre la concaténation de R1, R2 et Text4 avec la clef K_{ab0} pour former un nouveau cryptogramme que la carte transmet 37 au pilote.

Le pilote transmet ce nouveau cryptogramme au module CSC R/W comme argument d'une deuxième demande d'authentification 38. La seconde demande d'authentification est désignée par "Authenticate2" dans la suite de la description. La deuxième demande d'authentification, "Authenticate2", se distingue de la première, "Authenticate1", en ce qu'elle ne provoque qu'un contrôle et non une génération de données cryptées.

En réponse à la demande "Authenticate2" 38, le module CSC R/W déchiffre le cryptogramme avec la clef K_{ab0}, vérifie 39 la présence de R2, et retourne 40 le résultat du test (OK/KO) au pilote. A cette étape du procédé, la carte SAM PKI et le module CSC R/W se sont authentifiés mutuellement. De plus, ils disposent chacun des nombres Text2 et Text4.

Les programmes permettant de répondre aux demandes "Authenticate1" et "Authenticate2" sont de préférence mémorisés dans la mémoire FLASH placée sur la carte électronique principale du coupleur.

Selon un mode de réalisation avantageux, les nombres Text2 et Text4 sont utilisés pour générer une nouvelle clef Ks avec une fonction déterminée telle qu'une concaténation, un mélange de bits, un opération logique (XOR, AND, OR...). Cette clef sera utilisée par la suite comme clef de session pour permettre de transmettre de façon confidentielle de nouvelles clefs K_{ab1}, K_{ab2},..., K_{abi} qui remplaceront successivement la clef K_{ab0} initiale dans la mise en œuvre du procédé décrit ci-dessus.

On dispose ainsi d'un procédé permettant une authentification mutuelle de la carte et du module CSC R/W, ce procédé suivant une norme, et permettant d'éviter toute fraude avec un scénario de rejeu grâce à la génération d'une nouvelle clef de session à chaque mise en œuvre du procédé.

On décrit maintenant plus en détail un exemple d'utilisation de la clef de session Ks. Le KMS génère une nouvelle clef K_{abi} et crypte cette clef avec la clef K_{EK}. Le cryptogramme, c'est à dire la clef K_{abi} cryptée avec la clef K_{EK}, est transmis du KMS jusqu'à l'unité centrale 5 de l'équipement, et plus généralement jusqu'au pilote 27.

Le pilote transmet le cryptogramme à la carte SAM PKI. La carte SAM PKI déchiffre le cryptogramme et obtient ainsi la clef K_{abi}. La clef K_{abi} est alors chiffrée par la carte SAM PKI avec la clef de session Kₛ en cours. La clef K_{abi} peut alors être transmise ainsi chiffrée au module CSC R/W qui pourra la déchiffrer avec la même clef de session. On obtient ainsi une nouvelle clef K_{abi} qui remplace l'ancienne clef partagée entre la carte SAM PKI et le module CSC R/W pour mettre en œuvre le procédé d'authentification mutuelle. La clef K_{abi} permettra de générer une nouvelle clef de session à la fin du procédé d'authentification mutuelle.

On peut aussi renouveler la clef de transport K_{TR0}. A cet effet, le KMS génère une nouvelle clef de transport K_{TR1}. Cette nouvelle clef de transport K_{TR1} est chiffrée avec l'ancienne clef de transport K_{TR0} pour former un cryptogramme [K_{TR1}]K_{TR0}. Le cryptogramme [K_{TR1}]K_{TR0} est à son tour chiffré avec la clef K_{EK} pour former un cryptogramme résultant [[K_{TR1}]K_{TR0}]K_{EK}. Ensuite, le cryptogramme résultant [[K_{TR1}]K_{TR0}]K_{EK} est acheminé jusqu'à l'unité centrale 5 de l'équipement, et plus généralement jusqu'au pilote 27. L'unité centrale 5 est le seul équipement disposant d'une copie de la clef K_{EK} (dans la carte SAM PKI), qui lui permet de déchiffrer le cryptogramme avec la clef K_{EK}. Après déchiffrement, l'unité centrale 5 chiffre le cryptogramme [K_{TR1}]K_{TR0} avec la clef de session Ks en cours, cette clef de session étant partagée uniquement entre la carte SAM PKI et le module CSC R/W. Le module CSC R/W, qui dispose de l'ancienne clef de transport K_{TR0} et de la clef de session Ks, peut déchiffrer ce cryptogramme et obtenir la nouvelle clef de transport K_{TR1}. Ce renouvellement est réalisé de façon itérative pour obtenir de nouvelles clefs K_{TR1}, K_{TR2}, .... , K_{TRi}.

L'intérêt est double. D'une part on évite les scénarii de rejeu en changeant les clefs utilisées à chaque mise en œuvre du procédé. D'autre part, on remplace les clefs usines par des clefs d'exploitation générées par le KMS. Ceci permet de transférer la responsabilité du fabriquant, qui ne connaît pas les clefs d'exploitation.

Pour des raisons de disponibilité, le cryptogramme [[K_{TR1}]K_{TR0}]K_{EK} peut être mémorisé dans la carte SAM PKI. Ceci permet de mettre à jour la clef de transport d'un nouveau module CSC R/W en utilisant uniquement la carte SAM PKI, sans nécessiter une nouvelle transmission depuis le KMS.

On décrit maintenant le procédé permettant de transmettre les clefs billettiques. Lorsque le KMS génère de nouvelles clés billettiques, il les chiffre avec la clef K_{TRi} puis avec la clef K_{EK}. Les clés billettique chiffrées sont transmises jusqu'à l'unité centrale de l'équipement, et plus généralement jusqu'au pilote 27, qui les transmet à la carte SAM PKI.

La clef K_{EK} est connue de la carte SAM PKI. La carte SAM PKI déchiffre avec cette clef, et retrouve les clefs billettiques chiffrées par la clef K_{TRi}. La carte SAM PKI chiffre alors ce résultat avec la clef de session Ks en cours et transmet le résultat chiffré au module CSC R/W par l'intermédiaire du pilote 27.

Le coupleur CSC R/W dispose des clefs Ks et K_{TRi}, ce qui lui permet en déchiffrant les données reçues de la carte SAM PKI, d'obtenir les nouvelles clefs billettiques.

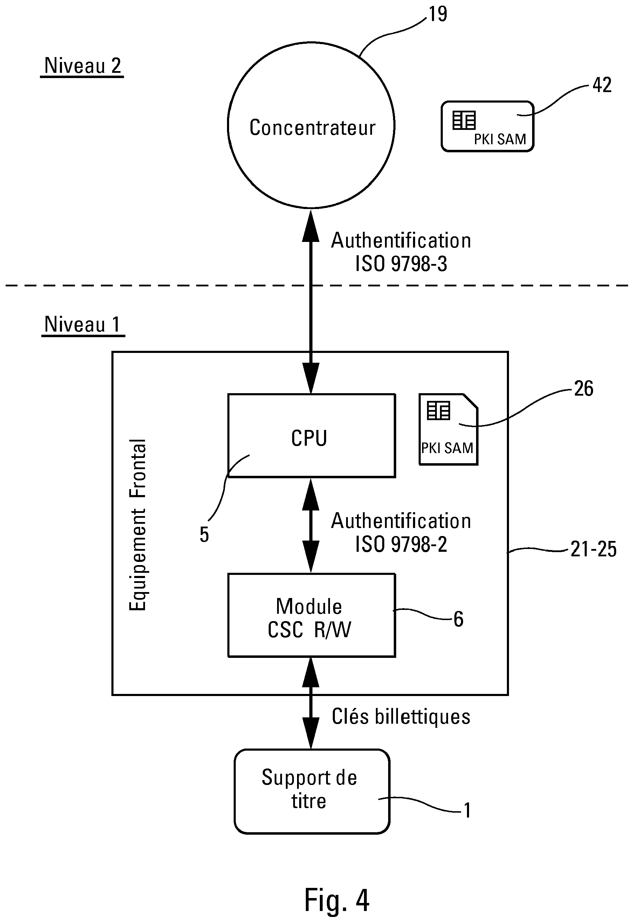

On se réfère maintenant à la figure 4. L'invention ne se limite pas à ce mode de réalisation. Il est possible de remplacer la carte SAM PKI 26 par un module SAM PKI 42 placé au niveau d'un équipement concentrateur 19 du niveau 2. Dans ce cas, le pilote 27 devient le concentrateur 16. L'unité centrale 5 de l'équipement frontal sera utilisée uniquement comme moyen de transmission de données, c'est à dire comme routeur.

Selon un autre mode de réalisation, on connecte un lecteur de carte SAM PKI à l'unité centrale 5 de l'équipement frontal. Le lecteur périphérique peut être connecté par l'intermédiaire d'une liaison Ethernet par exemple. La carte SAM PKI 26 est alors lue avec ce lecteur par l'unité centrale.

L'invention s'applique bien entendu à d'autres types de modules de lecture et d'écriture que les modules de type CSC R/W. On comprendra par exemple que le même procédé s'applique aux modules de lecture et d'écriture de tickets à bande magnétique, de jetons à puce... et à tout type de support physique.

Le procédé d'authentification mutuelle décrit peut être remplacé par tout autre procédé dans lequel les entités (module de lecture et d'écriture d'une part, et module SAM d'autre part) cherchant à s'authentifier partagent au moins une clef secrète symétrique ou des clefs secrètes asymétriques, chacune disposant d'une clé privé et d'une clé publique associée à la clé privée de l'autre.

## Revendications

1. Procédé de chargement de clés billettiques d'un module d'accès sécurisé (26) vers un module de lecture et d'écriture (28) de titres de transport destiné à équiper un équipement frontal (21-25), le module d'accès sécurisé (26) et le module de lecture et d'écriture partageant au moins une clef secrète K_{abi}, ledit procédé comportant les étapes suivantes :
(a) mémorisation d'un certificat numérique dans le module d'accès sécurisé (26), ledit certificat numérique ayant été formé par une autorité de certification (17) à partir de données d'identification dudit équipement frontal ;
(b) mise en relation fonctionnelle dudit module d'accès sécurisé (26) avec ledit équipement frontal (21-25);
(c) authentification mutuelle dudit module de lecture et d'écriture (28) et dudit module d'accès sécurisé (26) avec au moins la clef secrète partagée K_{abi},
(d) si l'authentification mutuelle est réussie, ledit module d'accès sécurisé (26) transmet les clés billettiques audit module de lecture et d'écriture.

2. Procédé selon la revendication 1 dans lequel les clés billettiques sont transmises au module de lecture et d'écriture sous forme chiffrée, le chiffrement étant réalisé au moyen d'une clef de transport K_{TRi} partagée uniquement entre l'entité ayant généré les clefs billettiques d'une part, et le module de lecture et d'écriture d'autre part.

3. Procédé selon la revendication 1 dans lequel le module à accès sécurisé étant un module cryptographique à clés asymétriques disposant d'une clé publique et d'une clé privée, l'autorité de certification associe la clé publique aux données d'identification de l'équipement frontal pour former le certificat numérique.

4. Procédé de gestion de clefs billettiques dans lequel :
(a) au moins une clef secrète est insérée dans le module de lecture et d'écriture lors de sa fabrication,
(b) cette clef secrète est insérée dans le module d'accès sécurisé (26),
(c) le procédé selon la revendication 1 est mis en oeuvre, le module de lecture et d'écriture et le module à accès sécurisé s'authentifiant mutuellement avec au moins la clef secrète insérée lors de la fabrication du module de lecture et d'écriture,
(d) une clef de session Ks est générée lors de l'authentification mutuelle, cette clef de session étant partagée entre le module de lecture et d'écriture et le module à accès sécurisé,
(e) la clef de session est utilisée pour transmettre au moins une nouvelle clef secrète d'exploitation K_{abi} au module de lecture et d'écriture d'une part et au module à accès sécurisé d'autre part, la clef secrète d'exploitation étant destinée à être utilisée à la place de la clé secrète insérée lors de la fabrication du module de lecture et d'écriture lors de la mise en œuvre du procédé d'authentification mutuelle,
(f) une nouvelle clef de session Ks étant générée de façon itérative à chaque mise en œuvre du procédé d'authentification mutuelle, la clef secrète d'exploitation étant remplacée par une nouvelle clé transmisse avec la nouvelle clé de session.

5. Procédé selon la revendication 1 dans lequel le procédé d'authentification mutuelle répond à la norme ISO 9798-2.

## Patentansprüche

1. Verfahren zum Laden von Ticketing-Schlüsseln aus einem gesicherten Zugriffsmodul (26) in ein Fahrscheinlese- und -schreibmodul (28) zur Installation in einem Frontend-Gerät (21-25), wobei das gesicherte Zugriffsmodul (26) und das Lese- und Schreibmodul wenigstens einen Geheimschlüssel K_{abi} gemeinsam nutzen, wobei das Verfahren die folgenden Schritte beinhaltet:
(a) Speichern eines digitalen Zertifikats in dem gesicherten Zugriffsmodul (26), wobei das digitale Zertifikat durch eine Zertifizierungsstelle (17) auf der Basis von Identifikationsdaten des Frontend-Geräts gebildet wurde;
(b) Herstellen einer funktionellen Beziehung zwischen dem gesicherten Zugriffsmodul (26) und dem Frontend-Gerät (21-25);
(c) gegenseitiges Authentifizieren des Lese- und Schreibmoduls (28) und des gesicherten Zugriffsmoduls (26) mit dem wenigstens einen gemeinsam genutzten Geheimschlüssel K_{abi},
(d) Übertragen, wenn die gegenseitige Authentifizierung erfolgreich ist, der Ticketing-Schlüssel zum Lese- und Schreibmodul durch das gesicherte Zugriffsmodul (26).

2. Verfahren nach Anspruch 1, bei dem die Ticketing-Schlüssel in verschlüsselter Form zum Lese- und Schreibmodul übertragen werden, wobei die Verschlüsselung mit einem Transportschlüssel K_{Tri} erfolgt, der nur zwischen der Entität, die die Ticketing-Schlüssel erzeugt hat, einerseits und dem Lese- und Schreibmodul andererseits gemeinsam genutzt wird.

3. Verfahren nach Anspruch 1, bei dem das gesicherte Zugriffsmodul ein kryptografisches Modul mit asymmetrischen Schlüsseln ist, bestehend aus einem öffentlichen Schlüssel und einem privaten Schlüssel, wobei die Zertifizierungsstelle den öffentlichen Schlüssel mit den Identifikationsdaten des Frontend-Geräts assoziiert, um das digitale Zertifikat zu bilden.

4. Verfahren zum Verwalten von Ticketing-Schlüsseln, bei dem:
(a) wenigstens ein Geheimschlüssel in das Lese- und Schreibmodul bei seiner Herstellung eingefügt wird,
(b) dieser Geheimschlüssel in das gesicherte Zugriffsmodul (26) eingefügt wird,
(c) das Verfahren nach Anspruch 1 durchgeführt wird, wobei sich das Lese- und Schreibmodul und das gesicherte Zugriffsmodul gegenseitig mit wenigstens dem bei der Herstellung des Lese- und Schreibmoduls eingefügten Geheimschlüssel authentifizieren,
(d) ein Sitzungsschlüssel Ks bei der gegenseitigen Authentifizierung erzeugt wird, wobei dieser Sitzungsschlüssel von dem Lese- und Schreibmodul und dem gesicherten Zugriffsmodul gemeinsam genutzt wird,
(e) der Sitzungsschlüssel zum Übertragen wenigstens eines neuen geheimen Bedienschlüssels K_{abi} zu dem Lese- und Schreibmodul einerseits und dem gesicherten Zugriffsmodul andererseits benutzt wird, wobei der geheime Bedienschlüssel für die Nutzung anstelle des bei der Herstellung des Lese- und Schreibmoduls eingefügten Geheimschlüssels bei der Durchführung des gegenseitigen Authentifizierungsvorgangs bestimmt ist,
(f) wobei ein neuer Sitzungsschlüssel Ks auf iterative Weise bei jeder Durchführung des gegenseitigen Authentifizierungsvorgangs erzeugt wird, wobei der geheime Bedienschlüssel durch einen mit dem neuen Sitzungsschlüssel übertragenen neuen Schlüssel ersetzt wird.

5. Verfahren nach Anspruch 1, bei dem das gegenseitige Authentifizierungsverfahren der Norm ISO 9798-2 entspricht.

## Claims

1. A method for downloading ticketing keys from a secure access module (26) to a ticket read and write module (28) intended to equip front office equipment (21-25), the secure access module (26) and the read and write module sharing at least one secret key K_{abi}, said method comprising the following steps:
(a) storing a digital certificate in the secure access module (26), said digital certificate having been formed by a certification authority (17) on the basis of identification data of said front office equipment;
(b) functionally connecting said secure access module (26) with said front office equipment (21-25);
(c) mutually authenticating said read and write module (28) and said secure access module (26) with at least the shared secret key K_{abi},
(d) said secure access module (26) transmitting, if the mutual authentication is successful, the ticketing keys to said read and write module.

2. The method as claimed in claim 1, wherein the ticketing keys are transmitted to the read and write module in encrypted form, the encryption being performed by means of a transport key K_{TRi} only shared between the entity that generated the ticketing keys, on the one hand, and the read and write module, on the other hand.

3. The method as claimed in claim 1, wherein with the secure access module being a cryptographic module with asymmetric keys having a public key and a private key, the certification authority associates the public key with the identification data of the front office equipment in order to form the digital certificate.

4. A method for managing ticketing keys, wherein:
(a) at least one secret key is introduced into the read and write module when it is manufactured,
(b) said secret key is introduced into the secure access module (26),
(c) the method as claimed in claim 1 is implemented, with the read and write module and the secure access module being mutually authenticated with at least the secret key introduced when the read and write module is manufactured,
(d) a session key Ks is generated during the mutual authentication, with said session key being shared between the read and write module and the secure access module,
(e) the session key is used to transmit at least one new secret operation key K_{abi} to the read and write module, on the one hand, and to the secure access module, on the other hand, with the secret operation key being intended to be used instead of the secret key introduced when the read and write module is manufactured during the implementation of the mutual authentication method,
(f) a new session key Ks is iteratively generated each time the mutual authentication method is implemented, with the secret operation key being replaced by a new key transmitted with the new session key.

5. The method as claimed in claim 1, wherein the mutual authentication method complies with standard ISO 9798-2.
